# EUROPÄISCHE PATENTSCHRIFT

(11) **EP 0 600 430 B1**
(45) Veröffentlichungstag und Bekanntmachung des Hinweises auf die Patenterteilung: **09.09.1998**
(21) Anmeldenummer: 93119251.2
(22) Anmeldetag: 28.11.1993
(51) Int. Cl.: E02D 31/00

(54) **Verfahren zur Abdichtung von kontaminierten Industriebrachen**
Method for sealing of contaminated fallow land
Procédé d'étanchéité pour sols en friche

(30) Priorität: 01.12.1992 DE 4240244
(43) Veröffentlichungstag der Anmeldung: 08.06.1994
(73) Patentinhaber: BERGWERKSVERBAND GMBH, D-45307 Essen (DE)
(72) Erfinder: Genske, Dieter, D-53225 Bonn (DE); Klapperich, Herbert, D-45527 Hattingen (DE)
(74) Vertreter: Schumacher, Horst, Dr. Dipl.-Phys.

(56) Entgegenhaltungen:
- MUELL UND ABFALL Bd. 20, Nr. 7 , Juli 1988 , BERLIN DE Seiten 281 - 295 J. DRESCHER 'Deponiedichtungen für Sonderabfalldeponien-Arbeitspapier'
- MUELL UND ABFALL Bd. 20, Nr. 1 , Januar 1988 , BERLIN DE Seiten 14 - 21 V. GOSSOW 'Hochsicherheits-Deponietechnik'
- 'Handboek bodemsaneringstechnieken' 1983 , STAATSUITGEVERIJ , S GRAVENHAGE * Seite 92 - Seite 94 * * Seite 102, Absatz 7.2.5; Abbildungen 7.2A-C,7.4A *

## Beschreibung

Die Erfindung betrifft ein Verfahren zur Abdichtung und Baureifmachung bzw. Bebauung von kontaminierten Industriebrachen gemäß Anspruch 1 sowie eine Bebauung auf einer abgedichteten Oberfläche.

Brachflächen, auf denen sich früher Industrieansiedlungen befanden, werden zunehmend wieder nutzbar gemacht. Grund hierfür ist der fehlende Platz für Neubebauung, die günstige Lage der Industriebrachen und die bereits in der Umgebung bestehende Infrastruktur. Bevor jedoch eine Industriebrache wieder nutzbar gemacht werden kann, ist das Ausmaß der Kontamination des Untergrundes durch entsprechende Untersuchungen abzuschätzen. Im Regelfall liegen massive Kontaminationen des Baugrundes vor. Weiterhin ist der Bau von Tiefgründungen durch Fundamentfragmente aus der Altbebauung gestört. Es liegt somit ein inhomogener kontaminierter Untergrund vor, der eine Neubebauung ohne weiteres nicht möglich macht.

Eine Reihe von Konzepten zur Sanierung solcher Brachflächen haben sich inzwischen durchgesetzt. Hierzu zählen in erster Linie
- der Aushub des kontaminierten inhomogenden Bodens und der Ersatz durch gründungsfähiges Bodenmaterial,
- die Verdichtung des Bodens durch statische Vorbelastung oder dynamische Intensivverdichtung,
- die chemische Behandlung des Bodens z.B. durch Einmischen von Chemikalien und Injektion von Chemikalien in den Baugrund.

Diese Verfahren zur Sanierung von Industriebrachen haben eine Reihe von Nachteilen. Im wesentlichen sind dies
- hohe Entsorgungskosten von kontaminiertem Material (Bodenaushub),
- hoher Zeitbedarf (statische Vorbelastung)
- Emission von Schadstoffen während der Sanierungsphase (Bodenaushub, dynamische Intensivverdichtung),
- hohe Ausführungskosten (chemische Verfahren).

Aus dem "Handbuch der Altlastensanierung", Kapitel 5.3.2.0.2, RV Decker's Verlag Geschenk, Heidelberg 1989, ist die Abdichtung von Altlasten bekannt, bei der auf einer Verdichtungsunterlage Gasdrainage-, Abdichtungs- und Wasserdrainageschichten sowie ein kulturfähiger Boden aufgebracht sind.

Eine ähnliche Abdichtung ist in "Müll und Abfall", Band 20, Nr. 7, Juli 1988, Berlin, Seiten 281 bis 295 und im "Grundbau-Taschenbuch", 4. Auflage, Teil 2, 1991, Seiten 568 und 569 beschrieben. Zusätzlich ist auch eine Lage von Geotextilen angeordnet.

Derartige Abdichtungen der Oberfläche einer Altlast dienen vornehmlich der Behinderung des Zutrittes von Oberflächenwasser in den kontaminierten Bereich bzw. in den Deponiekörper. Eine Bebauung der abgedichteten Altlast ist nicht möglich.

Der Erfindung liegt die Aufgabe zugrunde, ein Verfahren und eine danach hergestellte Bebauung zur Verfügung zu stellen, mit dem bzw. mit der es möglich ist, eine Industriebrache abzudichten und baureif zu machen bzw. zu bebauen.

Diese Aufgabe wird durch die Merkmale des Patentanspruchs 1 gelöst.

Eine entsprechende Bebauung ist in Anspruch 2 niedergelegt.

Durch die erfindungsgemäße Bewehrung des Baugrundes durch Geogitter wird eine erhebliche Baugrundverbesserung erzielt, so daß konstruktive Lasten auch bei inhomogenen Baugrundbedingungen aufgenommen werden können.

Durch das Geogitter gemäß Merkmal b) werden Inhomogenitäten des Untergrundes ausgeglichen.

Das integrierte Drain- und Dichtsystem wird durch die Geogitterlagen geschützt, so daß keine unzulässigen Zugbelastungen auftreten. Das Drain- und Dichtsystem verhindert, wie aus dem Stand der Technik bekannt, daß Oberflächenwasser in die Altlast eindringt und so oberflächennahe Schadstoffe in das Grundwasser trägt. Das Drain- und Dichtsystem ist weiterhin eine Gassperre, so daß schädliche Gase nicht an die Oberfläche dringen können.

Hinsichtlich der erfindungsgemäßen Anzahl der Geogitter gemäß Merkmal e) kann der Fachmann auf die Bemessungsregeln für bewehrte Gründungspolster zurückgreifen.

Die Erfindung wird nachfolgend anhand der Zeichnung näher beschrieben. Es zeigt die
- Figur 1: den schematischen Aufbau der erfindungsgemäßen Abdichtung und die
- Figur 2: die bei dem erfindungsgemäßen Abdichtungssystem in Abhängigkeit von der Belastung auftretenden Deformationen.

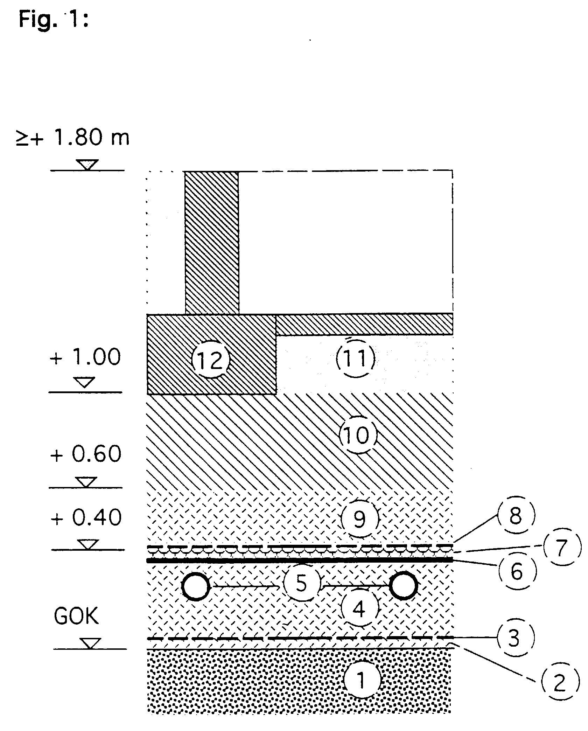

In der Figur 1 ist der schematische Aufbau der erfindungsgemäßen Abdichtung einer kontaminierten Industriebrache dargestellt.

Ein Untergrund 1, der stark kontaminiert und inhomogen ist, wird mit Oberflächenverdichtungsgeräten konsolidiert. Auf dem Untergrund 1 wird ein Planum 2 aufgebracht, auf das eine Lage Geogitter 3 gelegt wird. Durch dieses Geogitter werden Zugkräfte aufgenommen und übertragen.

Auf das Geogitter 3 wird eine Lage 4 grobkörnigen Materials als Stützpolster aufgebracht. In der Lage 4 ist eine Gasdrainage 5 vorgesehen. Die Lage 4 ist mit einer Kunststoffdichtungsbahn mit Schutzvlies 6 abgedeckt. Darüber wird eine Wasserdrainage 7 mit einem zweiten Geogitter 8 angeordnet, auf das eine weitere Lage 9 mit grobkörnigem Material als Stützpolster aufgebracht wird. Über diese Lage 9 wird ein Auffüllungsbereich 10 für zusätzliche Bewehrungen mit Geogittern (Gründungspolster) angeordnet. Dem Abschluß bildet ein weiterer Auffüllungsbereich 11, der die Frostfreiheit einer Bebauung 12 gewährleistet.

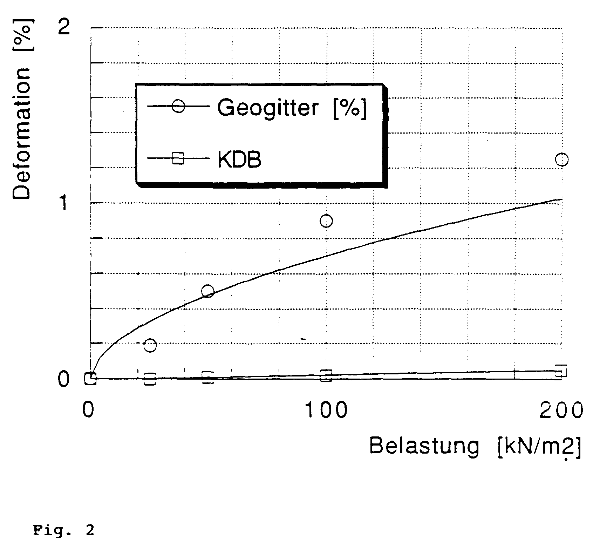

In der Figur 2 ist die Deformation des Geogitters sowie der Kunststoffdichtungsbahn in Abhängigkeit von der Belastung dargestellt. Die Deformation des Geogitters ist erheblich, während die der Kunststoffdichtungsbahn nur geringfügig ist. Durch die in dem Diagramm niedergelegten Meßergebnisse wird bestätigt, daß durch den erfindungsgemäßen Aufbau die Abdichtfunktion bei hohen Belastungen erhalten bleibt.

### Beispiel

Das Verfahren wurde auf einer Industriebrache mit extrem inhomogenen Baugrundbedingungen erprobt. Die Anordnung der Geokunststoffe entsprach dabei der Anordnung gemäß Figur 1. Auf dem ca. 500 m² großem Testfeld wurden Belastungsversuche durchgeführt, mit denen eine mehrstöckige Bebauung simuliert wurde. Figur 2 zeigt die gemessenen Deformationen in der Kunststoffdichtungsbahn und dem darüberliegenden Geogitter. Die Deformationen des Geogitters sind erheblich höher als die der Kunststoffdichtungsbahn, die innerhalb der zulässigen Grenzen bleibt. Die bemessenen Werte bestätigen die Schutzfunktion und die baugrundverbessernde Wirkung des erfindungsgemäßen Abdichtsystems.

### Bezugszeichenliste

- 1: Untergrund
- 2: Planum
- 3: Geogitter
- 4: grobkörniges Material
- 5: Gasdrainage
- 6: Schutzvlies
- 7: Wasserdrainage
- 8: Geogitter
- 9: grobkörniges Material
- 10: Auffüllungsbereich
- 11: Auffüllungsbereich
- 12: Bebauung

## Patentansprüche

1. Verfahren zur Abdichtung und Baureifmachung bzw. Bebauung von kontaminierten Industriebrachen, bei dem
a) auf eine verdichtete Oberfläche der Industriebrache ein Planum aufgebracht, auf das
b) eine Lage Geogitter gelegt, auf das
c) Geogitter eine Lage körnigen Materials aufgebracht wird, die mit
d) den im Deponiebau üblichen Gasdrainage-, Abdichtungs- und Wasserdrainageschichten abgedeckt werden, auf die
e) weitere Geogitter, getrennt durch Lagen nichtbindigen Materials derart gelegt werden, daß ein
f) Auffüllungsbereich mit Geogittern derart bewehrt ist, daß ein Gründungpolster entsteht, das konstruktive Lasten aus der Bebauung aufnehmen kann und
g) auf dem Gründungspolster ein Bauwerk erstellt wird.

2. Bebauung auf einer abgedichteten Oberfläche einer kontaminierten Industriebrache, hergestellt nach dem Verfahren des Anspruchs 1, **dadurch gekennzeichnet**, daß auf einer verdichteten Oberfläche der Industriebrache ein Planum, über dem eine Lage Geogitter mit einer Lage körnigen Materials angeordnet ist, über der ein Drain- und Dichtsystem ausgebildet ist, auf dem weitere Geogitter, getrennt durch Lagen nicht-bindigen Materials derart angeordnet sind, daß ein Auffüllungsbereich, der mit Geogittern bewehrt ist, als Gründungspolster entsteht, das konstruktive Lasten aus der Bebauung aufnehmen kann und auf dem Gründungspolster ein Bauwerk angeordnet ist.

## Claims

1. A method of sealing contaminated industrial fallow lands and of making them ready for building purposes or building upon them, in which
a) a levelling layer is applied to a compacted surface of the industrial fallow land, onto which levelling layer
b) a layer of geomesh is placed onto which
c) a layer of granular material is applied, these being covered
d) with the layers for gas drainage, sealing and water drainage which are conventional in landfill construction, onto which
e) further geomeshes - separated by layers of cohesionless material - are placed in such a manner that a
f) filling region is reinforced with geomeshes in such a manner that a foundation cushion arises which can absorb structural loads from building and
g) a construction is erected upon the foundation cushion.

2. Building upon a sealed surface of a piece of contaminated industrial fallow land, produced in accordance with the method of Claim 1, characterised in that a levelling layer [is applied] on a compacted surface of the industrial fallow land, above which a layer of geomesh with a layer of granular material is arranged, above which a drainage and sealing system is formed on which further geomeshes - separated by layers of cohesionless material - are arranged in such a manner that a filling region reinforced with geomeshes arises as a foundation cushion which can absorb structural loads from the building, and a construction is arranged on the foundation cushion.

## Revendications

1. Procédé pour rendre étanche et pour préparer pour la construction respectivement pour construire sur des sols industriels contaminés en friche où
a) il est appliqué sur une surface compactée du sol industriel en friche une plate-forme de terre sur laquelle
b) il est placé une couche de géogrille sur laquelle
c) géogrille il est appliqué une couche de matériau en grains qui sont recouvertes par
d) les couches de drainage de gaz, d'étanchéité et de drainage d'eau usuelles dans la construction sur des dépôts de déchets, sur lesquelles
e) sont placées d'autres géogrilles, séparées par des couches de matériau non liant de façon
f) qu'une zone de remplissage soit armée de géogrilles de façon à produire une couche de fondement qui est apte à recevoir des charges constructives de la construction et
g) où il est réalisé sur la couche de fondement une construction.

2. Construction sur une surface rendue étanche d'un sol industriel contaminé en friche, réalisée selon le procédé de la revendication 1, caractérisée en ce qu'il est réalisé sur une surface compactée du sol industriel en friche une plate-forme sur laquelle est disposée une couche de géogrille avec une couche de matériau en grains, sur laquelle est réalisée un système de drainage et d'étanchéité, sur lequel sont disposées d'autres géogrilles, séparées par des couches d'un matériau non liant de façon à ce qu'une zone de remplissage armée de géogrilles soit produite comme couche de fondement qui est apte à recevoir des charges constructives de la construction et où il est disposé sur la couche de fondement une construction.
